# EUROPEAN PATENT APPLICATION

(11) **EP 4 527 866 A1**
(43) Date of publication of application: **26.03.2025**
(21) Application number: 23903784.9
(22) Date of filing: 16.11.2023
(51) Int. Cl.: C08F 257/02, C08F 212/08, C08F 220/32, C09J 151/06, C09J 11/08

(54) **ADHESION-IMPARTING RESIN AND PREPARATION METHOD THEREFOR**

(30) Priority: 16.12.2022 KR 20220177396
(71) Applicant: Kolon Industries, Inc., Seoul 07793 (KR)
(72) Inventor: KIM, Myung Jong, Seoul 07793 (KR); LEE, Wan Jae, Seoul 07793 (KR); PARK, Seung Soo, Seoul 07793 (KR)
(74) Representative: Vossius & Partner Patentanwälte Rechtsanwälte mbB
(86) International application number: PCT/KR2023/018463
(87) International publication number: WO 2024/128581

(57) **Abstract**

The present disclosure provides an adhesion-imparting resin including: a repeating unit (a) derived from a petroleum resin-based monomer; and a repeating unit (b) derived from a phenolic monomer, wherein an ethylenically unsaturated compound including an epoxy group is bonded to the repeating unit (b), and the adhesion-imparting resin may have many residual double bonds, and thus, heat resistance of an acryl-based adhesive including the adhesion-imparting resin may be improved.

## Description

### Technical Field

The present disclosure relates to an adhesion-imparting resin and a method of preparing the same.

### Background Art

Adhesives are used as materials for securing members in various fields including automobiles, electronic and electrical products, and construction materials.

For example, on an automobile manufacturing site, adhesives are used to secure automobile interior members to the interior of an automobile. In addition, on a manufacturing site for electronic devices such as mobile phones and liquid crystal displays, adhesives are used to secure cushioning materials or the like installed inside an electronic product for the purpose of protecting the electronic product from impacts, to secure exterior members of an electronic product, and to secure members constituting image display devices such as liquid crystal display devices, organic electroluminescent (EL) display devices, and plasma display panels (PDPs).

For the adhesives, there has been a transition from solvent-based adhesives to water-based adhesives in the interest of reducing environmental impact, and in recent years, there has been a preference for using water-based acryl-based adhesives that have an acryl-based polymer or the like dispersed in an aqueous medium.

The acryl-based adhesive is often used in a mixture with an adhesion-imparting resin, to further improve adhesive properties such as adhesive strength and constant weight holding power.

However, when used with such an adhesion-imparting resin, the reactivity with the acryl-based polymer included in the acryl-based adhesive may be low and the softening point may be low, and thus, the heat resistance may also deteriorate.

Accordingly, the need for an adhesion-imparting resin capable of improving the heat resistance of an acryl-based adhesive has been increasing.

### Disclosure

### Technical Problem

To address the aforementioned problem, the present disclosure provides an adhesion-imparting resin having excellent reactivity with an acryl-based polymer and thus improving the heat resistance of an acryl-based adhesive, and a method of preparing the adhesion-imparting resin.

### Technical Solution

One aspect of the present disclosure relates to an adhesion-imparting resin including: a repeating unit (a) derived from a petroleum resin-based monomer; and a repeating unit (b) derived from a phenolic monomer, wherein an ethylenically unsaturated compound including an epoxy group is bonded to the repeating unit (b).

Another aspect of the present disclosure relates to a method of preparing an adhesion-imparting resin, including: preparing a primary polymer from a first reaction composition including a petroleum resin-based monomer and a phenolic monomer; and preparing an adhesion-imparting resin from a second reaction composition including the primary polymer and an ethylenically unsaturated compound including an epoxy group.

### Advantageous Effects

The adhesion-imparting resin according to the present disclosure may have improved reactivity with an acryl-based polymer.

In addition, the adhesion-imparting resin according to the present disclosure may have excellent reactivity with the acryl-based polymer, and thus, the heat resistance of an acryl-based adhesive including the acryl-based polymer and the adhesion-imparting resin may be improved.

### Best Mode

### Mode for Invention

Hereinafter, more aspects and various embodiments of the present disclosure will be described in more detail.

The terms or words used herein should not be limited to usual or dictionary meanings, and should be interpreted as meanings and concepts corresponding to the technical idea of the present disclosure, based on the principle that the inventor can appropriately define the concepts of terms to explain the disclosure in the best manner.

The terminology used herein is used for the purpose of describing particular embodiments only and is not intended to limit the present disclosure. As used herein, the singular forms are intended to include the plural forms as well, unless the context clearly indicates otherwise. In the present disclosure, it should be understood that terms such as "include" or "have" are intended to specify the presence of a feature, number, step, operation, component, part, or any combination thereof described in the specification, but do not exclude in advance the possibility of the presence or addition of one or more other features, numbers, steps, operations, components, parts, or any combination thereof.

Specifically, one aspect of the present disclosure relates to an adhesion-imparting resin including: a repeating unit (a) derived from a petroleum resin-based monomer; and a repeating unit (b) derived from a phenolic monomer, wherein an ethylenically unsaturated compound including an epoxy group is bonded to the repeating unit (b).

For example, the petroleum resin-based monomer may include an ethylenically unsaturated group or an aromatic group.

For example, the adhesion-imparting resin may include a structure in which the repeating unit (a) derived from a petroleum resin-based monomer and the repeating unit (b) derived from a phenolic monomer are included, wherein an ethylenically unsaturated compound including an epoxy group is bonded to the repeating unit (b), thereby increasing the proportion of residual double bonds in the adhesion-imparting resin. Accordingly, the adhesion-imparting resin may have improved reactivity with an acryl-based polymer described below. Accordingly, the heat resistance of an adhesive including the adhesion-imparting resin may be improved.

For example, the adhesion-imparting resin may include an ethylenically unsaturated compound including an epoxy group bonded to the repeating unit (b) to further increase the proportion of residual double bonds, thereby improving the reactivity of the adhesion-imparting resin with an acryl-based polymer described below.

According to an embodiment, the repeating unit (b) may include a hydroxyl group. For example, when the petroleum resin-based monomer and the phenolic monomer undergo catalytic polymerization, a hydroxyl group remains even after the polymerization reaction, and thus, the repeating unit (b) may include the hydroxyl group.

According to an embodiment, the bond between the hydroxyl group included in the repeating unit (b) and the ethylenically unsaturated compound including an epoxy group may be formed by a reaction between the hydroxyl group included in the repeating unit (b) and the epoxy group included in the ethylenically unsaturated compound.

For example, the reaction between the hydroxyl group included in the repeating unit (b) and the epoxy group included in the ethylenically unsaturated compound may be performed according to the following Reaction scheme 1. In this case, a bond between the hydroxyl group included in the repeating unit (b) and the epoxy group included in the ethylenically unsaturated compound may be formed by a ring-opening reaction of the epoxy group included in the ethylenically unsaturated compound by the hydroxyl group included in the repeating unit (b):

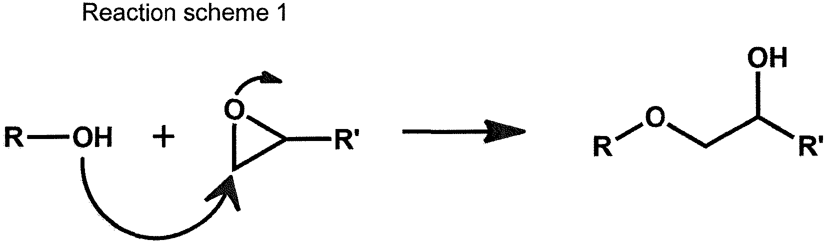

According to an embodiment, the petroleum resin-based monomer may include a commercially applicable liquid C5-C20 fraction, a diolefin, or a dicyclopentadiene.

According to another embodiment, the petroleum resin-based monomer may include a C5 fraction-based monomer, a C9 fraction-based monomer, a diolefin, or a dicyclopentadiene.

For example, the C5 fraction-based monomer may include 1-pentene, 2-methyl-2-butene n-pentane, propadiene, cyclopentadiene, piperylene, isoprene, cyclopentene, and the like.

For example, the C9 fraction-based monomer may include a styren-based monomer, dicyclopentadiene, indene, trans-β-methylstyrene, methylindene, benzene/toluene/xylene (BTX), and the like.

For example, the diolefin may include propadiene, dicyclopentadiene, cyclopentene, and the like.

According to an embodiment, the petroleum resin-based monomer may include a C9 fraction-based monomer.

The C9 fraction-based monomer may include two or more styrene-based monomers represented by Formula 1.

For example, the styrene-based monomer may be represented by Formula 1: 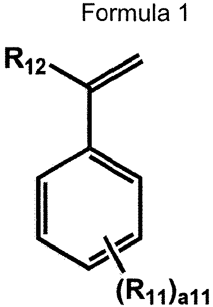 wherein, in Formula 1,
a11 is an integer from 0 to 5, and
R₁₁ and R₁₂ are each independently: hydrogen, deuterium, -F, -Cl, -Br, -I, a cyano group, or a nitro group;
a C₁-C₂₀ alkyl group or a C₁-C₂₀ alkoxy group, each unsubstituted or substituted with deuterium, -F, -Cl, -Br, -I, a cyano group, a C₆-C₂₀ aryl group, or any combination thereof; or
a C₆-C₂₀ aryl group that is unsubstituted or substituted with deuterium, -F, -Cl, -Br, -I, a cyano group, a C₁-C₂₀ alkyl group, a C₁-C₂₀ alkoxy group, or any combination thereof.

According to an embodiment, R₁₁ and R₁₂ are each independently: hydrogen, deuterium, -F, -Cl, -Br, -I, a cyano group, or a nitro group;
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-desoxy group, an isodesoxy group, a sec-desoxy group, or a tert-desoxy group, each unsubstituted or substituted with deuterium, -F, -Cl, -Br,-I, a cyano group, a C₆-C₂₀ aryl group, or any combination thereof; or
a phenyl group, a naphthyl group, anthracenyl group, a phenanthrenyl group, or a pyrenyl group, each unsubstituted or substituted with deuterium, -F, -Cl, -Br, -I, a cyano group, a C₁-C₂₀ alkyl group, a C₆-C₂₀ aryl group, or any combination thereof.

According to an embodiment, R₁₁ and R₁₂ may each independently be hydrogen, a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, or a tert-hexyl group.

According to an embodiment, R₁₂ may be hydrogen or a methyl group.

According to an embodiment, the C9 fraction-based monomer may include a styrene monomer and an α-methylstyrene monomer.

According to an embodiment, a ratio of an amount of the α-methylstyrene monomer to an amount of the styrene monomer in the C9 fraction-based monomer may be 0.25 to 2.

For example, a ratio of an amount of the repeating unit (b) derived from a phenolic monomer to an amount of the repeating unit (a) derived from a petroleum resin-based monomer may be 0.5 to 2, 0.5 to 1.8, 0.75 to 2, 0.75 to 1.8, 1 to 2, 1 to 1.8, 1.2 to 2, 1.4 to 2, 1.2 to 1.8, or 1.4 to 1.8.

According to an embodiment, the phenolic monomer may be represented by Formula 2: 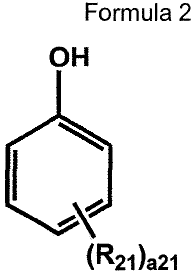 wherein, in Formula 2,
a21 is an integer from 0 to 5, and
R₂₁ is: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

According to an embodiment, R₂₁ may be: hydrogen, deuterium, -F, -Cl, -Br, -I, a hydroxyl group, a cyano group, or a nitro group;
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-desoxy group, an isodesoxy group, a sec-desoxy group, or a tert-desoxy group, each unsubstituted or substituted with deuterium, -F, -Cl, -Br,-I, a hydroxyl group, a cyano group, a C₆-C₂₀ aryl group, or any combination thereof; or
a phenyl group, a naphthyl group, an anthracenyl group, a phenanthrenyl group, or a pyrenyl group, each unsubstituted or substituted with deuterium, -F, -Cl, -Br, -I, a hydroxyl group, a cyano group, a C₁-C₂₀ alkyl group, a C₆-C₂₀ aryl group, or any combination thereof.

According to an embodiment, R₂₁ may be hydrogen, a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, or a tert-hexyl group.

According to an embodiment, the (meth)acrylic monomer may include a methyl acrylate, an ethyl acrylate, a propyl acrylate, a butyl acrylate, a methyl metacrylate, an ethyl metacrylate, a propyl metacrylate, a butyl metacrylate, or any combination thereof.

According to an embodiment, the phenolic monomer may include phenol.

According to an embodiment, a ratio of an amount of the repeating unit (b) derived from a phenolic monomer to an amount of the repeating unit (a) derived from a petroleum resin-based monomer may be 0.15 to 1.

For example, the ratio of the amount of the repeating unit (b) derived from a phenolic monomer to the amount of the repeating unit (a) derived from a petroleum resin-based monomer may be 0.2 to 1, 0.2 to 0.8, 0.2 to 0.6, 0.2 to 0.5, 0.2 to 0.45, 0.22 to 1, 0.23 to 1, or 0.23 to 0.5.

According to an embodiment, the ethylenically unsaturated monomer including an epoxy group may include a vinyl group, an allyl group, or an acryloyl group.

According to an embodiment, the ethylenically unsaturated monomer including an epoxy group may be a compound represented by Formula 3: 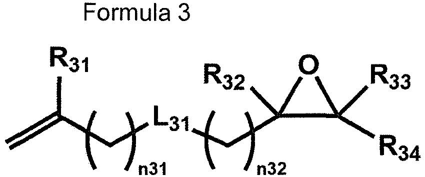 wherein, in Formula 3,
L₃₁ may be *-C(=O)-*', *-C(=S)-*', *-C(=O)-O-*', *-O-*', or *-S-*'.

According to an embodiment, L₃₁ may be *-C(=O)-*', *-C(=O)-O-*', or *-O-*'. According to another embodiment, L₃₁ may be *-C(=O)-O-*, or *-O-*'.

* and *' may each refer to a binding site to a neighboring atom.

n31 and n32 may each independently be an integer from 0 to 5.

According to an embodiment, n31 and n32 may each independently be an integer from 0 to 3.

According to another embodiment, n31 may be an integer from 0 to 2. Also, n32 may be an integer from 1 to 3.
R₃₁ to R₃₄ are each independently: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

According to an embodiment, in Formula 3, R₃₁ to R₃₄ may each independently be: hydrogen, deuterium, -F, -Cl, -Br, -I, a cyano group, or a nitro group;
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-desoxy group, an isodesoxy group, a sec-desoxy group, or a tert-desoxy group, each unsubstituted or substituted with deuterium, -F, -Cl, -Br,-I, a cyano group, a C₆-C₆₀ aryl group, or any combination thereof; or
a phenyl group, a naphthyl group, anthracenyl group, a phenanthrenyl group, or a pyrenyl group, each unsubstituted or substituted with deuterium, -F, -Cl, -Br, -I, a cyano group, a C₁-C₂₀ alkyl group, a C₆-C₂₀ aryl group, or any combination thereof.

According to an embodiment, in Formula 3, R₃₁ to R₃₄ may each independently be: hydrogen, deuterium, -F, -Cl, -Br, -I, a cyano group, or a nitro group; or
a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, a methoxy group, an ethoxy group, an n-propoxy group, an isopropoxy group, an n-butoxy group, a sec-butoxy group, an isobutoxy group, a tert-butoxy group, an n-pentoxy group, a tert-pentoxy group, a neopentoxy group, an isopentoxy group, a sec-pentoxy group, a 3-pentoxy group, a sec-isopentoxy group, an n-hexoxy group, an isohexoxy group, a sec-hexoxy group, a tert-hexoxy group, an n-heptoxy group, an isoheptoxy group, a sec-heptoxy group, a tert-heptoxy group, an n-octoxy group, an isooctoxy group, a sec-octoxy group, a tert-octoxy group, an n-nonoxy group, an isononoxy group, a sec-nonoxy group, a tert-nonoxy group, an n-desoxy group, an isodesoxy group, a sec-desoxy group, or a tert-desoxy group, each unsubstituted or substituted with deuterium, -F, -Cl, -Br,-I, a cyano group, a C₆-C₆₀ aryl group, or any combination thereof.

According to an embodiment, in Formula 3, R₃₁ to R₃₄ may each independently be: hydrogen, deuterium, -F, -Cl, -Br, -I, a cyano group, or a nitro group; or a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, or a tert-decyl group.

According to another embodiment, in Formula 3, R₃₁ to R₃₄ may each independently be hydrogen, deuterium, -F, -Cl, -Br, -I, a hydroxyl group, a cyano group, a nitro group, a methyl group, an ethyl group, an n-propyl group, an isopropyl group, an n-butyl group, a sec-butyl group, an isobutyl group, or a tert-butyl group.

According to an embodiment, the ethylenically unsaturated monomer including an epoxy group may be a compound represented by Formula 3-1: 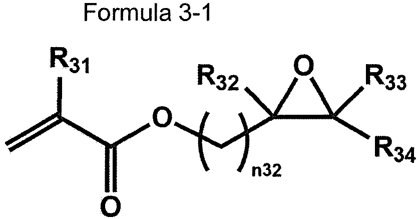 wherein, in Formula 3-1,
R₃₁ to R₃₄ and n32 may be the same as described herein.

According to another embodiment, the ethylenically unsaturated monomer including an epoxy group may be a compound represented by Formula 3-2:

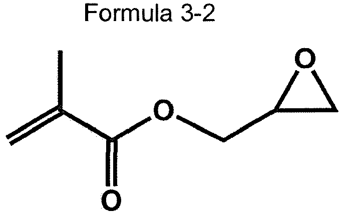

According to an embodiment, an amount of the repeating unit (a) derived from a petroleum resin-based monomer may be 40 to 70 wt% based on the total weight of the adhesion-imparting resin, an amount of the repeating unit (b) derived from a phenolic monomer may be 10 to 40 wt% based on the total weight of the adhesion-imparting resin, and an amount of the ethylenically unsaturated compound including an epoxy group bonded to the repeating unit (b) may be 10 to 40 wt% based on the total weight of the adhesion-imparting resin.

For example, the amount of a repeating unit (a) derived from a petroleum resin-based monomer may be 45 to 70 wt%, 50 to 70 wt%, 40 to 69 wt%, 40 to 68 wt%, or 45 to 69 wt%, based on the total weight of the adhesion-imparting resin.

For example, the amount of the repeating unit (b) derived from a phenolic monomer may be 12 to 30 wt%, 14 to 30 wt%, 15 to 30 wt%, 10 to 28 wt%, 10 to 26 wt%, 10 to 25 wt%, or 14 to 26 wt%, based on the total weight of the adhesion-imparting resin.

For example, the amount of the ethylenically unsaturated compound including an epoxy group bonded to the repeating unit (b) may be 15 to 40 wt%, 19 to 40 wt%, 20 to 40 wt%, 21 to 40 wt%, 22 to 40 wt%, 10 to 30 wt%, 10 to 28 wt%, 10 to 27 wt%, or 19 to 28 wt%, based on the total weight of the adhesion-imparting resin.

According to an embodiment, an amount of double bonds in the adhesion-imparting resin as measured via ¹H-NMR may be 2 to 10 mol%.

For example, the amount of double bonds in the adhesion-imparting resin as measured via ¹H-NMR may be 2 to 5 mol%, 2 to 4.5 mol%, 2 to 4.4 mol%, 2.2 to 5 mol%, 2.7 to 5 mol%, 2.8 to 5 mol%, 3.0 to 5 mol%, 2.2 to 4.5 mol%, 2.7 to 4.5 mol%, 2.8 to 4.5 mol%, 3.0 to 4.5 mol%, 2.2 to 4.4 mol%, 2.7 to 4.4 mol%, 2.8 to 4.4 mol%, or 3.0 to 4.4 mol%.

The amount (mol%) of double bonds in the adhesion-imparting resin may be measured by dissolving the adhesion-imparting resin in a CDCl₃ solvent to a concentration of 10 % and then using 400 MHz ¹H-NMR. For example, the amount (mol%) of double bonds in the adhesion-imparting resin may be measured by measuring a NMR peak of the entire range (9.0 to 0.0 ppm) using ¹H-NMR, and then calculating a ratio of an integral value of the double bond range (6.2 to 5.1 ppm) to an integral value of the entire range (9.0 to 0.0 ppm).

According to an embodiment, a weight average molecular weight (Mw) of the adhesion-imparting resin may be from 400 g/mol to 3,000 g/mol.

For example, the weight average molecular weight (Mw) of the adhesion-imparting resin may be 800 to 3,000 g/mol, 1,200 to 3,000 g/mol, 1,700 to 3,000 g/mol, 1,800 to 3,000 g/mol, 1,900 to 3,000 g/mol, 400 to 2,800 g/mol, 800 to 2,800 g/mol, 1,200 to 2,800 g/mol, 1,200 to 2,600 g/mol, or 1,700 to 2,600 g/mol.

According to another embodiment, the weight average molecular weight (Mw) of the adhesion-imparting resin may be 400 to 600 g/mol, 400 to 580 g/mol, or 400 to 550 g/mol.

According to an embodiment, a number average molecular weight (Mn) of the adhesion-imparting resin may be 400 g/mol to 6,000 g/mol.

For example, the number average molecular weight (Mn) of the adhesion-imparting resin may be 500 g/mol to 6,000 g/mol, 600 g/mol to 6,000 g/mol, 700 g/mol to 6,000 g/mol, 800 g/mol to 6,000 g/mol, 500 g/mol to 5,000 g/mol, 600 g/mol to 5,000 g/mol, 700 g/mol to 5,000 g/mol, 800 g/mol to 5,000 g/mol, 500 g/mol to 4,500 g/mol, 600 g/mol to 4,500 g/mol, 700 g/mol to 4,500 g/mol, or 800 g/mol to 4,500 g/mol.

According to an embodiment, a Z-average molecular weight (Mz) of the adhesion-imparting resin may be 30,000 g/mol to 120,000 g/mol.

For example, the Z-average molecular weight of the adhesion-imparting resin may be 33,000 g/mol to 120,000 g/mol, 35,000 g/mol to 120,000 g/mol, 30,000 g/mol to 110,000 g/mol, 33,000 g/mol to 110,000 g/mol, 35,000 g/mol to 110,000 g/mol, 30,000 g/mol to 80,000 g/mol, 33,000 g/mol to 80,000 g/mol, 35,000 g/mol to 80,000 g/mol, 30,000 g/mol to 70,000 g/mol, 35,000 g/mol to 70,000 g/mol, 30,000 g/mol to 65,000 g/mol, 33,000 g/mol to 65,000 g/mol, 35,000 g/mol to 65,000 g/mol, or 35,000 g/mol to 63,000 g/mol.

According to an embodiment, a polymer dispersity index (PDI) of the adhesion-imparting resin may be 2 to 10. For example, the polymer dispersity index (PDI) of the adhesion-imparting resin may be 2 to 9, 2 to 8.5, 2 to 8, 2 to 5, 2 to 4, 2 to 3.6, 2 to 3, or 2.1 to 3.

For example, when the average molecular weight value and the PDI of the adhesion-imparting resin satisfy the above ranges, the adhesion-imparting resin may have improved reactivity with an acryl-based polymer.

According to an embodiment, a softening point of the adhesion-imparting resin may be 100 °C or less.

For example, the softening point of the adhesion-imparting resin may be 20 to 100 °C, 20 to 80 °C, 20 to 70 °C, 20 to 65 °C, 30 to 100 °C, 35 to 100 °C, 40 to 100 °C, 42 to 100 °C, 45 to 100 °C, or 20 to 68 °C.

Another aspect of the present disclosure provides a method of preparing an adhesion-imparting resin, including: preparing a primary polymer from a first reaction composition including a petroleum resin-based monomer and a phenolic monomer; and preparing an adhesion-imparting resin from a second reaction composition including the primary polymer and an ethylenically unsaturated compound including an epoxy group.

For example, the types, properties, amounts of the petroleum resin-based monomer, the phenolic monomer, and the ethylenically unsaturated compound including an epoxy group, and the properties of the adhesion-imparting resin are same as described herein.

According to an embodiment, a ratio of an amount of the phenolic monomer to an amount of the petroleum resin-based monomer in the first reaction composition may be 0.15 to 1.

For example, the ratio of the amount of the phenolic monomer to the amount of the petroleum resin-based monomer in the first reaction composition may be 0.2 to 0.8, 0.2 to 0.6, 0.2 to 0.5, 0.2 to 0.45, 0.22 to 1, 0.23 to 1, or 0.23 to 0.5.

For example, the monomers in the first reaction composition may refer to the remaining components excluding a solvent among the components included in the first reaction composition.

According to an embodiment, the first reaction composition may further include a solvent.

For example, the solvent may include xylene.

According to an embodiment, an amount of the solvent in the first reaction composition may be 30 to 70 wt% based on the total weight of the first reaction composition.

According to an embodiment, a ratio of a weight of the total monomers to a weight of the solvent in the first reaction composition may be 0.5 to 2.

According to an embodiment, the first reaction composition may further include a catalyst.

For example, the catalyst may include an acid catalyst. For example, the acid catalyst may include a BF₃ catalyst or an AlCl₃ catalyst.

According to an embodiment, an amount of the catalyst in the first reaction composition may be 0.05 to 0.3 wt% based on the total amount of the monomers.

For example, an amount of the catalyst in the first reaction composition may be 0.1 to 0.3 wt%, 0.15 to 0.3 wt%, 0.16 to 0.3 wt%, 0.05 to 0.25 wt%, or 0.05 to 0.2 wt%, based on the total amount of the monomers.

According to an embodiment, the preparing of a primary polymer may include performing catalytic polymerization to prepare the primary polymer from the first reaction composition.

According to an embodiment, the catalytic polymerization may be performed at a temperature of 100 °C or less. For example, the catalytic polymerization may be performed at a temperature range of 80 °C or less, 60 °C or less, 50 °C or less, or -20 °C to 60 °C.

According to an embodiment, the preparing of a primary polymer may include performing the catalytic polymerization, and then performing a first degassing reaction to prepare the primary polymer.

For example, the first degassing reaction may be performed at a temperature of 150 °C to 300 °C and a pressure of 1 mbar to 50 mbar for 1 minute to 20 minutes.

According to another embodiment, the first degassing reaction may be performed at a temperature of 220 °C to 280 °C and a pressure of 5 mbar to 25 mbar for 5 minutes to 15 minutes, or at a temperature of 240 °C to 260 °C and a pressure of 5 mbar to 15 mbar for 8 minutes to 12 minutes.

For example, in the preparing a primary polymer, catalytic polymerization may be performed to prepare a primary polymer including a hydroxyl group. For example, the hydroxyl group included in the primary polymer may undergo a bonding reaction with an ethylenically unsaturated compound including an epoxy group, which will be described below.

According to an embodiment, in the preparing of an adhesion-imparting resin from the second reaction composition, a bonding reaction between the hydroxyl group in the primary polymer included in the first reaction composition and the epoxy group in the ethylenically unsaturated compound may be carried out to prepare the adhesion-imparting resin.

For example, the bonding reaction between the hydroxyl group included in the primary polymer and the epoxy group included in the ethylenically unsaturated compound may be performed according to Reaction scheme 1:

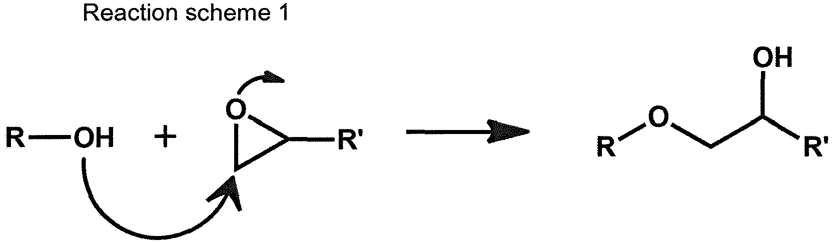

According to an embodiment, the preparing an adhesion-imparting resin may include thermally polymerizing the second reaction composition to prepare an adhesion-imparting resin.

For example, the bonding reaction between the hydroxyl group in the primary polymer and the epoxy group in the ethylenically unsaturated compound may be performed through thermal polymerization.

According to an embodiment, the thermal polymerization may be performed at a temperature range of 150 to 300 °C. For example, the thermal polymerization may be performed at a temperature range of 160 to 300 °C, 180 to 300 °C, 150 to 260 °C, 150 to 220 °C, or 160 to 220 °C.

According to an embodiment, the second reactant composition may include a catalyst. For example, the catalyst included in the second reaction composition may include a base catalyst.

According to an embodiment, the base catalyst may include NaOH or KOH.

According to an embodiment, when the second reaction composition includes a catalyst, the thermal polymerization may be performed at a temperature range of 50 to 120 °C. For example, the thermal polymerization of the second reaction composition may be performed at a temperature range of 60 to 120 °C, 70 to 120 °C, 50 to 110 °C, 50 to 100 °C, or 50 to 95 °C.

According to an embodiment, the preparing of an adhesion-imparting resin may include, after performing a thermal polymerization, performing a second degassing reaction to prepare the adhesion-imparting resin.

For example, the second degassing reaction may be performed at a temperature of 120 °C to 250 °C and a pressure of 1 mbar to 50 mbar for 1 minute to 20 minutes.

According to another embodiment, the second degassing reaction may be performed at a temperature of 150 °C to 250 °C and a pressure of 5 mbar to 25 mbar for 5 minutes to 15 minutes, or at a temperature of 180 °C to 220 °C and a pressure of 5 mbar to 15 mbar for 8 minutes to 12 minutes.

According to an embodiment, the above-described adhesion-imparting resin may be applied to an adhesive. According to another embodiment, the above-described adhesion-imparting resin may be applied to an acryl-based adhesive.

Another aspect of the present disclosure may provide an adhesive including the above-described adhesion-imparting resin. For example, the adhesion-imparting resin may impart adhesive strength to the adhesive.

According to an embodiment, the adhesive may be an acryl-based adhesive including the adhesion-imparting resin and an acryl-based polymer. For example, the adhesion-imparting resin may have excellent reactivity with the acryl-based polymer, and thus, the heat resistance of the acryl-based adhesive may be improved. For example, as the amount of residual double bonds in the adhesion-imparting resin increases, the reactivity with the acryl-based polymer may be excellent, and thus, the heat resistance of the acryl-based adhesive may be excellent.

According to an embodiment, the acryl-based adhesive may be a photocurable acryl-based adhesive.

For example, the acryl-based adhesive may further include a crosslinking agent, a polymerization initiation catalyst, a curing accelerator, and the like in addition to the adhesion-imparting resin and the acryl-based polymer.

According to an embodiment, in the acryl-based adhesive, an amount of the adhesion-imparting resin may be 5 wt% or more based on the total weight of the acryl-based adhesive.

According to another embodiment, in the acryl-based adhesive, an amount of the adhesion-imparting resin may be 5 to 30 wt%, 5 to 25 wt%, or 5 to 20 wt%, based on the total weight of the acryl-based adhesive.

According to an embodiment, the acryl-based adhesive may have excellent heat resistance and be transparent. In this case, the acryl-based adhesive may allow light to penetrate evenly therein, allowing a photocuring reaction to proceed evenly. Accordingly, the heat resistance of the acryl-based adhesive may be further improved.

### [Definition of terms]

In the present specification, a C₁-C₂₀ alkyl group refers to a linear or branched aliphatic hydrocarbon monovalent group having 1 to 20 carbon atoms, and specific examples thereof include a methyl group, an ethyl group, an n-propyl group, an isopropyl group, an n-butyl group, a sec-butyl group, an isobutyl group, a tert-butyl group, an n-pentyl group, a tert-pentyl group, a neopentyl group, an isopentyl group, a sec-pentyl group, a 3-pentyl group, a sec-isopentyl group, an n-hexyl group, an isohexyl group, a sec-hexyl group, a tert-hexyl group, an n-heptyl group, an isoheptyl group, a sec-heptyl group, a tert-heptyl group, an n-octyl group, an isooctyl group, a sec-octyl group, a tert-octyl group, an n-nonyl group, an isononyl group, a sec-nonyl group, a tert-nonyl group, an n-decyl group, an isodecyl group, a sec-decyl group, a tert-decyl group, and the like. In this specification, a C₁-C₂₀ alkylene group refers to a divalent group having the same structure as the C₁-C₂₀ alkyl group.

In the present specification, C₁-C₂₀ alkoxy group refers to a monovalent group having Formula of -OA₁₀₁ (wherein, A₁₀₁ is the C₁-C₂₀ alkyl group), and specific examples thereof include a methoxy group, an ethoxy group, an isopropyloxy group, and the like.

In the present specification, a C₆-C₂₀ aryl group refers to a monovalent group having a carbocyclic aromatic system having 6 to 20 carbon atoms, and includes a phenyl group, a naphthyl group, an anthracenyl group, a phenanthrenyl group, a pyrenyl group, and the like. When the C₆-C₂₀ aryl group includes two or more rings, the two or more rings may be connected to each other.

Hereinafter, the present disclosure will be described in more detail through Examples. These Examples are for illustrative purposes only to describe the present disclosure in more detail, and it will be apparent to those skilled in the art that these Examples should not be construed as limiting the scope of the present disclosure.

### Example 1. Preparation of adhesion-imparting resin

In a 1000 ml kettle, monomers (ASM: α-methylstyrene, ST: styrene, and phenol) were injected according to the mixing amount (wt%) described in Table 1 below, and 375 g of xylene as a solvent was added to prepare a first reaction composition.

3.46 g (0.24 wt% based on the total weight of monomers) of catalyst BF₃-phenolate (BF₃ 26 %) was added to the first reaction composition, and then polymerization was performed at 0 °C for 120 minutes. Subsequently, a first degassing reaction was performed at a temperature of 250 °C and a pressure of 10 mbar for 10 minutes to prepare a primary polymer.

Subsequently, the primary polymer and an ethylenically unsaturated compound including an epoxy group (GMA: glycidyl methacrylate) were mixed according to the mixing amount (wt%) described in Table 1 below to prepare a second reaction composition.

The second reaction composition was thermally polymerized at 210 °C for 1 hour. Subsequently, a second degassing reaction was performed at a temperature of 210 °C and a pressure of 10 mbar for 10 minutes to prepare an adhesion-imparting resin.

### Examples 2 to 7 and Comparative Example 1

An adhesion-imparting resin was prepared in the same manner as in Example 1, except that the amounts of the monomers, catalyst, and ethylenically unsaturated compound and the reaction conditions were changed as shown in Table 1 below.

In Comparative Example 1, an adhesion-imparting resin was prepared in the same manner as in Example 1, except that a bonding reaction of the ethylenically unsaturated compound was not performed, as shown in Table 1 below.

### Comparative Example 2

In a 1000 ml chemical reactor equipped with a stirrer, a reflux condenser, a thermometer, and a nitrogen injection device, 180 g of α-methylstyrene, 120 g of styrene, 75 g of phenol, and 75 g of glycidyl methacrylate were injected, and 450 g of xylene as a solvent was added to prepare a first reaction composition.

3.46 g (0.24 wt% based on the total weight of monomers) of catalyst BF₃ was added to the first reaction composition, and then polymerization was performed at 0 °C for 120 minutes. Subsequently, a first degassing reaction was performed at a temperature of 250 °C and a pressure of 10 mbar for 10 minutes to prepare an adhesion-imparting resin.

**[Table 1]**

| Classifi cation | First reaction composition | | | Catalytic reaction | | | Second reaction composition | | Thermal reaction conditio ns |
|---|---|---|---|---|---|---|---|---|---|
| | AMS (g) | ST (g) | Pheno I (9) | Type | Amo unt (g) | Reac tion condi tions | Primary polymer (g) | GMA (9) | |
| Examp le 1 | 180 | 120 | 75 | BF₃ | 3.46 | 0 °C, 2hr | 150 | 63.2 | 210 °C, 1hr |
| Examp le 2 | 180 | 120 | 75 | BF₃ | 4.61 | 0 °C, **2hr** | 150 | 61.8 | 210 °C, 1hr |
| Examp le 3 | 180 | 120 | 75 | BF₃ | 2.31 | 20 ° C, 2hr | 150 | 63.2 | 210 °C, 1hr |
| Examp le 4 | 180 | 120 | 75 | BF₃ | 2.31 | 20 ° C, 2hr | 150 | 63.2 | 210 °C, 1hr |
| Examp le 5 | 157.5 | 105 | 112.5 | BF₃ | 2.31 | 40 ° C, 2hr | 250 | 105.4 | 210 °C, 1hr |
| Examp le 6 | 157.5 | 105 | 112.5 | BF₃ | 2.31 | 60 ° C, 2hr | 262.85 | 110.8 | 210 °C, 1hr |
| Examp le 7 | 180 | 120 | 75 | BF₃ | 4.61 | 0 °C, 2hr | 150 | 48 | 210 °C, 1hr |
| Compa rative Examp le 1 | 180 | 120 | 75 | BF₃ | 3.46 | 0 °C, 2hr | - | - | - |

### Evaluation Example 1. Molecular weight measurement

Using gel permeation chromatography (GPC, product of Hewlett Packard, model name HP-1100), the adhesion-imparting resins prepared in Examples 1 to 7 and Comparative Examples 1 and 2 were measured for weight average molecular weight (Mw), number average molecular weight (Mn), Z-average molecular weight (Mz), and polymer density index (PDI).

The measurement of the Mw, Mn, Mz, and PDI of the adhesion-imparting resin were performed at 30 °C with 100 µl of each of the adhesion-imparting resins prepared in Examples 1 to 7 and Comparative Examples 1 and 2 being dissolved in tetrahydrofuran to a concentration of 4,000 ppm, injected into GPC, and then flowed at a flow rate of 1.0 mL/min while using tetrahydrofuran as a mobile phase of GPC. For a column, three Plgels (1,000+500+100 Å) by Agilent Technologies, Inc. were connected in series. As a detector, an RI detector (product of Hewlett Packard, HP-1047A) was used, and the measurement was performed at 30 °C. The measurement results are shown in Table 2 below.

### Evaluation Example 2-1. Amount (mol%) of GMA in resin

For the adhesion-imparting resins prepared in Examples 1 to 7 and Comparative Examples 1 and 2, the number of moles of GMA participating in the reaction was calculated by subtracting the number of moles of unreacted GMA remaining after the preparation of the adhesion-imparting resin from the number of moles of GMA added during the preparation.

The mol% of GMA was calculated by calculating a ratio of the number of moles of the primary polymer added during the preparation of the adhesion-imparting resin to the number of moles of GMA participating in the reaction. The results are shown in Table 2 below.

### Evaluation Example 2-2. Measurement of amount (mol%) of double bonds in resin

Each of the adhesion-imparting resins prepared in Examples 1 to 7 and Comparative Examples 1 and 2 was added to a CDCl₃ solvent to prepare a sample having a concentration of 10%. For each sample, a ¹H-NMR spectrum was measured from 0.0 to 9.0 ppm by using a 400 MHz NMR device. Therein, a peak value in the range of 6.2 to 5.1 ppm was integrated and then a ratio thereof to an integrated value of the entire range was calculated to calculate the amount (mol%) of double bonds. The results are shown in Table 2 below.

### Evaluation example 3. Measurement of softening point

The softening points of the adhesion-imparting resins prepared in Examples 1 to 7 and Comparative Examples 1 and 2 were measured by using a ring and ball softening method (ASTM E 28). Each of the adhesion-imparting resins prepared in Examples 1 to 7 and Comparative Examples 1 and 2 was melted and poured into a ring-shaped mold, placed in a beaker containing glycerin, a ball was placed on the ring-shaped mold containing each resin, and then the temperature was increased by 2.5 °C per minute to measure a temperature (a softening point) at which the resin melts and the ball falls.

**[Table 2]**

| Classificat ion | Weight average Molecular weight (g/mol) | Numbe r averag e molecu lar weight (g/mol) | Z-average molecul ar weight (g/mol) | Polym er disper sity index (PDI) | Softeni ng point (°C) | GMA Amount (mol%) | Amount of double bonds (mol%) |
|---|---|---|---|---|---|---|---|
| Example 1 | 2,078 | 782 | 70,190 | 2.66 | 67.8 | 21.8 | 3.31 |
| Example 2 | 2,558 | 718 | 68,056 | 3.56 | 62.9 | 19.1 | 2.76 |
| Example 3 | 1,725 | 647 | 65,232 | 2.67 | 53.7 | 21.1 | 3.15 |
| Example 4 | 1,862 | 657 | 67,367 | 2.83 | 42.5 | 24.8 | 3.48 |
| Example 5 | 5092 | 625 | 101,160 | 8.15 | 42.9 | 27.5 | 3.58 |
| Example 6 | 1123 | 512 | 39,101 | 2.19 | Semisolid phase | 25.7 | 4.49 |
| Example 7 | 2458 | 732 | 68520 | 3.36 | 63.2 | 16.8 | 2.12 |
| Comparati ve Example 1 | 945 | 598 | 1883 | 1.58 | 77.6 | 0 | 0 |
| Comparati ve Example 2 | Gel formation | | | | | | |

### Preparation of acryl-based adhesive

15 wt% of each of the adhesion-imparting resins of Examples 1 to 7 and Comparative Examples 1 and 2 was mixed with 85 wt% of an acryl-based polymer to prepare an acryl-based adhesive.

### Evaluation Example 4. Heat resistance evaluation

The heat resistance of each of the acryl-based adhesives including the adhesion-imparting resins of Examples 1 to 7 and Comparative Examples 1 and 2 was evaluated according to ASTM D3654 method. A PET film was coated at a thickness of 50 µm with each of the acryl-based adhesives including the adhesion-imparting resins of Examples 1 to 7 and Comparative Examples 1 and 2 to prepare a tape. Each of the prepared tapes was subjected to UV irradiation through an exposure device, and then the tape was cut into pieces of 1 inch x 6 inches to prepare a test specimen.

The prepared test specimens were each attached to a washed SUS 304 steel plate. At this time, for the test specimen that was not attached to the steel plate, the part required for measurement was compressed by moving a roll back and forth once thereon using a roll down device from Cheminstruments, Inc. Subsequently, the test specimen that was not attached to the SUS 304 steel plate was cut with scissors to have a size of about 3 inches. The test specimen that was not attached to the SUS 304 steel plate was inserted into a ring for measuring cohesion. Each two scotch tapes for fixing were attached on the front and back sides of the SUS 304 steel plate in parallel to the horizontal end of the ring for measuring cohesion, into which the test specimen was inserted, and then the test specimen was fixed by stapling 2 times parallel between the ring for measuring cohesion and the SUS304 steel plate. The remaining test specimen was cut so that the test specimen was attached on the SUS 304 steel plate at a size of width of 1 inch and height of 1 inch.

The SUS304 steel plate to which the test specimen was attached was hanged on a SUS steel plate cradle in a shear test oven. A 1 kg weight was hanged on the ring for measuring holding power attached to the test specimen. Then, the temperature of the oven was increased at a rate of 0.5 degrees per minute, and the temperature at which the weight was fallen down is shown in Table 3 below.

**[Table 3]**

| Classification | Heat resistance (°C) |
|---|---|
| Example 1 | 70.3 |
| Example 2 | 69.5 |
| Example 3 | 71.6 |
| Example 4 | 72.3 |
| Example 5 | 70.4 |
| Example 6 | 75.2 |
| Example 7 | 65.5 |
| Comparative Example 1 | 40.2 |
| Comparative Example 2 | Gel formed and unable to be measured |

As shown in Table 3, when comparing the heat resistance and adhesive strength of the acryl-based adhesives of Examples 1 to 7 and Comparative Examples 1 and 2, Examples 1 to 7 had excellent heat resistance.

The Examples and Comparative Examples above have been described as examples to describe the present disclosure, and therefore, the present disclosure is not limited thereto. It will be apparent to those skilled in the art that various modifications may be made therein to enable the present disclosure, and therefore, the technical protection scope of the disclosure should be defined by the appended claims.

## Claims

1. An adhesion-imparting resin comprising:
a repeating unit (a) derived from a petroleum resin-based monomer; and
a repeating unit (b) derived from a phenolic monomer,
wherein an ethylenically unsaturated compound including an epoxy group is bonded to the repeating unit (b).

2. The adhesion-imparting resin of claim 1,
wherein the bonding between the repeating unit (b) and the ethylenically unsaturated compound including an epoxy group is formed by a reaction between a hydroxyl group included in the repeating unit (b) and the epoxy group included in the ethylenically unsaturated compound.

3. The adhesion-imparting resin of claim 1,
wherein the petroleum resin-based monomer comprises a C9 fraction-based monomer.

4. The adhesion-imparting resin of claim 3,
wherein the C9 fraction-based monomer comprises two or more styrene-based monomers represented by Formula 1: 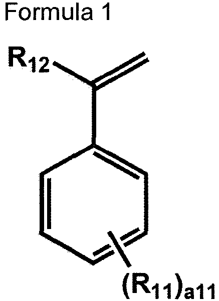 wherein, in Formula 1,
a11 is an integer from 0 to 5, and
R₁₁ and R₁₂ are each independently: hydrogen, deuterium, -F, -Cl, -Br, -I, a cyano group, or a nitro group;
a C₁-C₂₀ alkyl group or a C₁-C₂₀ alkoxy group, each unsubstituted or substituted with deuterium, -F, -Cl, -Br, -I, a cyano group, a C₆-C₂₀ aryl group, or any combination thereof; or
a C₆-C₂₀ aryl group that is unsubstituted or substituted with deuterium, -F, -Cl, -Br, -I, a cyano group, a C₁-C₂₀ alkyl group, a C₁-C₂₀ alkoxy group, or any combination thereof.

5. The adhesion-imparting resin of claim 3,
wherein the C9 fraction-based monomer comprises a styrene monomer and an α-methylstyrene monomer.

6. The adhesion-imparting resin of claim 5,
wherein a ratio of an amount of the α-methylstyrene monomer to an amount of the styrene monomer in the C9 fraction-based monomer is 0.25 to 2.

7. The adhesion-imparting resin of claim 1,
wherein the phenolic monomer is represented by Formula 2: 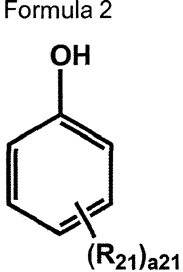 wherein, in Formula 2,
a21 is an integer from 0 to 5, and
R₂₁ is: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

8. The adhesion-imparting resin of claim 1,
wherein a weight ratio of the repeating unit (b) derived from a phenolic monomer to the repeating unit (a) derived from a petroleum resin-based monomer is 0.15 to 1.

9. The adhesion-imparting resin of claim 1,
wherein the ethylenically unsaturated compound including an epoxy group comprises a vinyl group, an allyl group, or an acryloyl group.

10. The adhesion-imparting resin of claim 1,
wherein the ethylenically unsaturated compound including an epoxy group is represented by Formula 3: 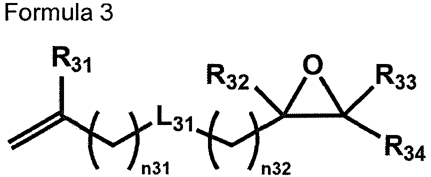 wherein, in Formula 3,
L₃₁ is *-C(=O)-*', *-C(=S)-*', *-C(=O)-O-*', *-O-*', or *-S-*',
n31 and n32 are each independently an integer from 0 to 5, and
R₃₁ to R₃₄ are each independently: hydrogen, deuterium, -F, -Cl, -Br, -I, a hydroxyl group, a cyano group, or a nitro group;
a C₁-C₂₀ alkyl group or a C₁-C₂₀ alkoxy group, each unsubstituted or substituted with deuterium, -F, -Cl, -Br, -I, a hydroxyl group, a cyano group, a C₆-C₂₀ aryl group, or any combination thereof; or
a C₆-C₂₀ aryl group that is unsubstituted or substituted with deuterium, -F, -Cl, -Br, -I, a hydroxyl group, a cyano group, a C₁-C₂₀ alkyl group, a C₁-C₂₀ alkoxy group, or any combination thereof.

11. The adhesion-imparting resin of claim 1,
wherein an amount of the repeating unit (a) derived from a petroleum resin-based monomer is 40 to 70 wt% based on the total weight of the adhesion-imparting resin,
an amount of the repeating unit (b) derived from a phenolic monomer is 10 to 40 wt% based on the total weight of the adhesion-imparting resin, and
an amount of the ethylenically unsaturated compound including an epoxy group bonded to the repeating unit (b) is 10 to 40 wt% based on the total weight of the adhesion-imparting resin.

12. The adhesion-imparting resin of claim 1,
wherein an amount of double bonds in the adhesion-imparting resin as measured via ¹H-NMR is 2 to 10 mol%.

13. The adhesion-imparting resin of claim 1,
wherein a weight average molecular weight (Mw) of the adhesion-imparting resin is 400 g/mol to 3,000 g/mol,
a number average molecular weight (Mn) of the adhesion-imparting resin is 400 g/mol to 6,000 g/mol,
a Z-average molecular weight (Mz) of the adhesion-imparting resin is 30,000 g/mol to 120,000 g/mol, and
a polymer dispersity index (PDI) of the adhesion-imparting resin is 2 to 10.

14. The adhesion-imparting resin of claim 1,
wherein a softening point of the adhesion-imparting resin is 100 °C or less.

15. A method of preparing an adhesion-imparting resin, comprising: preparing a primary polymer from a first reaction composition comprising a petroleum resin-based monomer and a phenolic monomer; and
preparing an adhesion-imparting resin from a second reaction composition comprising the primary polymer and an ethylenically unsaturated compound including an epoxy group.

16. The method of preparing an adhesion-imparting resin of claim 15,
wherein the first reaction composition further comprises a catalyst, and
the preparing of the primary polymer comprises performing catalytic polymerization to prepare the primary polymer from the first reaction composition.

17. The method of preparing an adhesion-imparting resin of claim 16,
wherein the catalytic polymerization is performed under temperature conditions of 100 °C or less in the presence of an acid catalyst.

18. The method of preparing an adhesion-imparting resin of claim 15,
wherein the preparing of the adhesion-imparting resin from the second reaction composition comprises performing a bonding reaction between a hydroxyl group in the primary polymer and the epoxy group in the ethylenically unsaturated compound to prepare the adhesion-imparting resin.

19. The method of preparing an adhesion-imparting resin of claim 18,
wherein the performing of the bonding reaction between a hydroxyl group in the primary polymer and the epoxy group in the ethylenically unsaturated compound to prepare an adhesion-imparting resin comprises performing thermal polymerization under temperature conditions of 150 to 300 °C.

20. The method of preparing an adhesion-imparting resin of claim 18,
wherein the second reaction composition comprises a base catalyst, and
wherein the bonding reaction between a hydroxyl group in the primary polymer and the epoxy group in the ethylenically unsaturated compound is performed under temperature conditions of 50 to 120°C in the presence of the base catalyst.
